(19) Europäisches Patentamt
European Patent Office
Office européen des brevets

(11) Veröffentlichungsnummer: **0 371 327 B1**

(12) **EUROPÄISCHE PATENTSCHRIFT**

(45) Veröffentlichungstag der Patentschrift: **09.02.94**

(51) Int. Cl.$^5$: **C09B 29/085**, D06P 1/18, C09B 67/22

(21) Anmeldenummer: **89121165.8**

(22) Anmeldetag: **16.11.89**

# (54) Monoazofarbstoffe, ihre Herstellung und Verwendung.

(30) Priorität: **28.11.88 DE 3840065**

(43) Veröffentlichungstag der Anmeldung:
**06.06.90 Patentblatt 90/23**

(45) Bekanntmachung des Hinweises auf die Patenterteilung:
**09.02.94 Patentblatt 94/06**

(84) Benannte Vertragsstaaten:
**CH DE FR GB LI**

(56) Entgegenhaltungen:
**EP-A- 0 216 339**
**DE-A- 1 419 879**
**FR-A- 1 515 551**
**US-A- 3 413 075**

(73) Patentinhaber: **CASSELLA Aktiengesellschaft**
**Hanauer Landstrasse 526**
**D-60386 Frankfurt(DE)**

(72) Erfinder: **Bühler, Ulrich Dr.**
**Kastanienweg 8**
**D-8755 Alzenau(DE)**
Erfinder: **Kühn, Reinhard**
**Heinrich-Bleicher-strasse 19**
**D-6000 Frankfurt am Main 50(DE)**
Erfinder: **Boos, Margareta**
**Am See 6**
**D-6234 Hattersheim(DE)**

(74) Vertreter: **Urbach, Hans-Georg, Dr. et al**
**Hanauer Landstrasse 526**
**D-60386 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft wertvolle Monoazofarbstoffe der allgemeinen Formel I

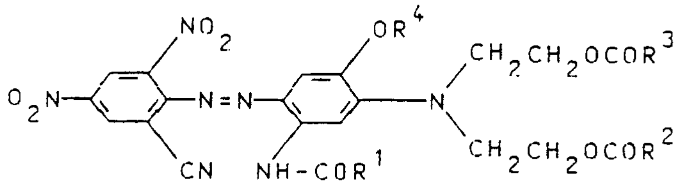

(I)

in der

| | |
|---|---|
| $R^1$ | Alkyl mit 1 bis 3 C-Atomen, |
| $R^2$ und $R^3$ | unabhängig voneinander Alkyl mit 2 bis 5 C-Atomen |
| $R^4$ | Methyl oder Ethyl |

bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Der für $R^1$ stehende Alkylrest mit 1 bis 3 C-Atomen kann Methyl, Ethyl, n-Propyl oder i-Propyl bedeuten. Bevorzugte Reste für $R^1$ sind Methyl und Ethyl.

Die für $R^2$ und/oder $R^3$ stehenden Alkylreste können geradkettig oder verzweigt sein. Beispiele für die für $R^2$ und/oder $R^3$ stehenden Alkylreste mit 2 bis 5 C-Atomen sind: Ethyl, n-Propyl, i-Propyl, n-Butyl, i-Butyl, tert.Butyl, sek.Butyl, n-Pentyl, Pentyl-2 und Pentyl-3.

Die für $R^2$ und/oder $R^3$ stehenden Alkylreste besitzen vorzugsweise 2 bis 4 C-Atome. Bevorzugte Reste für $R^2$ und/oder $R^3$ sind Ethyl und insbesondere n-Propyl, i-Propyl, n-Butyl, i-Butyl und sek.Butyl.

Für $R^4$ steht bevorzugt Methyl.

Bevorzugt sind die Reste $R^2$ und $R^3$ gleich.

Bevorzugt beträgt die Summe der C-Atome in den Resten $R^1$, $R^2$ und $R^3$ 5 bis 11, besonders bevorzugt 6 bis 10.

Bevorzugt sind für $R^1$, $R^2$ und $R^3$ die Kombinationen $CH_3/C_2H_5/C_2H_5$; $CH_3$/n-Pentyl/n-Pentyl; $CH_3$/Pentyl-2/Pentyl-2; $CH_3$/Pentyl-3/Pentyl-3.

Besonders bevorzugt sind für $R^1$, $R^2$ und $R^3$ die Kombinationen $CH_3$/n-Butyl/n-Butyl; $CH_3$/i-Butyl/i-Butyl; $CH_3$/sek.Butyl/sek.Butyl; $C_2H_5$/n-Propyl/n-Propyl; $C_2H_5$/i-Propyl/i-Propyl.

Ganz besonders bevorzugt sind für $R^1$, $R^2$ und $R^3$ die Kombinationen $CH_3$/n-Propyl/n-Propyl; $CH_3$/i-Propyl/i-Propyl; $C_2H_5/C_2H_5/C_2H_5$.

Bevorzugte Farbstoffe der Formel I sind solche mit bevorzugten Resten $R^1$, $R^2$ und $R^3$.

Besonders bevorzugte Farbstoffe sind solche mit besonders bevorzugten Kombinationen $R^1$, $R^2$ und $R^3$ und $R^4$ gleich Methyl.

Ganz besonders bevorzugte Farbstoffe sind solche mit ganz besonders bevorzugten Kombinationen $R^1$, $R^2$ und $R^3$ und $R^4$ gleich Methyl.

Die den erfindungsgemäßen Farbstoffen ähnlichen Farbstoffe der Formel II und III

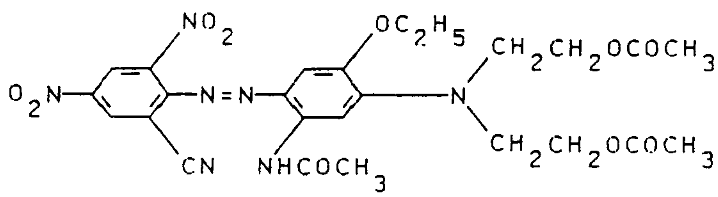

(II)

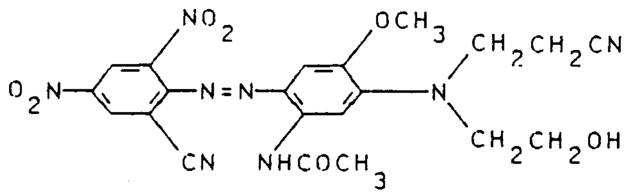

(III)

sind bereits bekannt und in dem DP 1 544 563 beschrieben.

Es wurde jedoch überraschenderweise gefunden, daß die erfindungsgemäßen Farbstoffe diesen Farbstoffen, insbesondere in den Applikationsechtheiten, wie pH-Empfindlichkeit, Reduktionsempfindlichkeit und Verkochechtheit, sowie in der Farbstärke überlegen sind und sehr gute Gebrauchsechtheiten, wie Thermomigrationsechtheit, Thermofixierechtheit, Wasserechtheit und Lichtechtheit, besitzen. Sie lassen sich darüber hinaus auch im alkalischen Ätzreservedruck einsetzen.

Die erfindungsgemäßen Farbstoffe haben eine grünstichig blaue Nuance und sind deshalb hervorragend dafür geeignet, rotstichige Blaufarbstoffe, z.B. solche der Formel IV

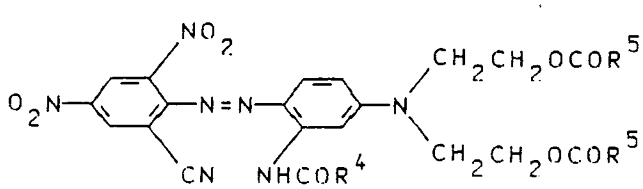

(IV)

wie sie für $R^4 = R^5 = CH_3$ z.B. in der Britischen Patentschrift 1 184 825 beschrieben sind, zu neutralen Blautönen abzunuancieren.

Die Herstellung der erfindungsgemäßen Farbstoffe erfolgt vorzugsweise dadurch, daß man einen Azofarbstoff der Formel V

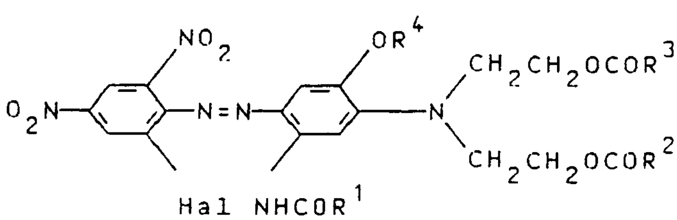

(V)

worin $R^1$, $R^2$, $R^3$ und $R^4$ die bereits genannten Bedeutungen besitzen und Hal ein Halogenatom, wie Chlor oder insbesondere Brom, bedeutet, in an sich bekannter Weise, z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nukleophilen Austauschreaktion unterwirft, wobei als nucleophiles Agenz das Cyanidion $CN^{\ominus}$ eingesetzt wird. Bei dieser Reaktion wird in dem Farbstoff der Formel V Hal gegen CN ausgetauscht.

Als Lösungsmittel für die Austauschreaktion werden inerte organische Lösungsmittel, wie z.B. Nitrobenzol oder Glycol- oder Diglycol-mono-methyl oder -mono-ethylether oder Mischungen solcher Lösungsmittel

untereinander und mit tertiären organischen Stickstoffbasen, dipolare aprotische Lösungsmitel, wie z.B. N-Methylpyrrolidon, Pyridin, Dimethylformamid, Dimethylsulfoxid oder Dicyan-dialkylthioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150 °C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel V können dadurch hergestellt werden, daß eine Diazoniumverbindung eines aromatischen Amins der allgemeinen Formel VI

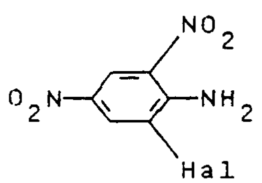

(VI)

worin Hal die bereits genannte Bedeutung besitzt, in an sich bekannter Weise mit einer Kupplungskomponente der allgemeinen Formel VII

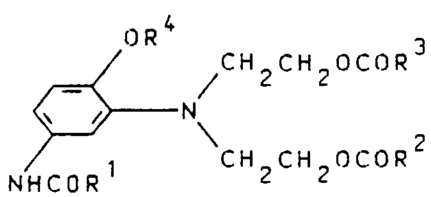

(VII)

worin $R^1$, $R^2$, $R^3$ und $R^4$ die oben angegebenen Bedeutungen haben, gekuppelt wird.

Aus den Aminen der allgemeinen Formel VI werden die Lösungen der Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen bei Temperaturen von -15 °C bis 40 °C erhalten.

Die Kupplung erfolgt ebenfalls in an sich bekannter Weise durch Vereinigung der erhaltenen Lösung der Diazoniumverbindung mit einer Lösung der Kupplungskomponente bei Temperaturen von 0 bis 40 °C, vorzugsweise 0 bis 25 °C, in einem geeigneten Lösungsmittel, wie z.B. einem Alkanol mit mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch.

In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel V kann wie üblich isoliert und getrocknet werden.

Die benötigten Kupplungskomponenten der Formel VII lassen sich aus bekannten Handelsprodukten nach bekannten Verfahren herstellen.

Ein weiteres Verfahren zur Herstellung der erfindungsgemäßen Farbstoffe besteht in der Acylierung von Farbstoffen der Formel VIII

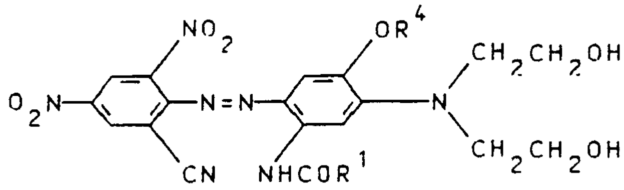

(VIII)

worin $R^1$ und $R^4$ die angegebenen Bedeutungen besitzen, mit bekannten Acylierungsmitteln der Formel

$X\text{-}COR^2$ bzw. $X\text{-}COR^3$

worin X ein unter Mitnahme des Bindungselektronenpaares abspaltbarer Rest ist und $R^2$ und $R^3$ die oben genannten Bedeutungen haben. Die Acylierungsmittel sind reaktive Derivate der Carbonsäuren der Formeln

$R^2COOH$ bzw. $R^3COOH$

wie z.B. Carbonsäurechloride (X = Cl) oder Carbonsäureanhydride (X = $R^2COO$- bzw. X = $R^3COO$-).

Bei der Durchführung der Acylierungsreaktion ist es zweckmaßig, zur Moderierung der Reaktion in einem Lösungs- oder Verdünnungsmittel zu arbeiten. Geeignet sind alle organischen Lösungsmittel, die mit den Acylierungsmitteln nicht in Reaktion treten können. Vorwiegend verwendet man aromatische Kohlenwasserstoffe, wie Benzol, Toluol, Xylol als Lösungs-, Verdünnungs- oder Dispergiermittel, wobei es zweckmäßig ist, die Acylierung in Gegenwart eines Säurefängers, wie beispielsweise einer tertiären organischen Aminbase, vorzunehmen. Acylierungen der genannten Art können auch in Gegenwart von Pyridin- oder Pyridinabkömmlingen als Lösungsmittel durchgeführt werden. In diesem Fall wirkt das Lösungsmittel selbst als Säurefänger. Die Acylierung mit Alkancarbonsäureanhydriden erfolgt bevorzugt im überschüssigen Alkancarbonsäureanhydrid selbst oder in der entsprechenden Alkancarbonsäure als Lösungsmittel. Die Acylierung der Farbstoffe der Formel VIII kann bei Temperaturen zwischen der normalen Zimmertemperatur und Temperaturen bis 150 °C ausgeführt werden. Pro mol des Farbstoffs der Formel VIII kommen in der Regel mindestens 2 mol des Acylierungsmittels zum Einsatz.

Die für dieses Herstellungsverfahren benötigten Farbstoffe der Formel VIII können dadurch hergestellt werden, daß eine Diazoniumverbindung eines aromatischen Amins der allgemeinen Formel VI

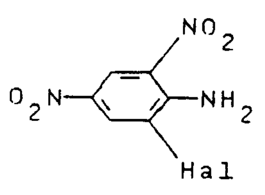

(VI)

in an sich bekannter Weise mit einer Kupplungskomponente der allgemeinen Formel IX

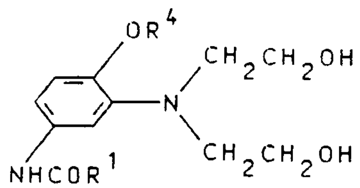

(IX)

worin Hal, $R^1$ und $R^4$ die oben angegebenen Bedeutungen haben, gekuppelt und anschließend das Halogenatom Hal durch den Cyanrest ausgetauscht wird.

Die Diazotierung des aromatischen Amins der Formel VI und die Kupplung der erhaltenen Diazoniumverbindung auf das Amin der Formel IX erfolgt im Rahmen der Bedingungen, die oben für die Herstellung der Farbstoffe der Formel V bereits ausführlich beschrieben wurden. Auch der anschliessende Austausch des Halogenatoms Hal gegen Cyan erfolgt im Rahmen der oben für die Herstellung der erfindungsgemäßen Farbstoffe der Formel I angegebenen Bedingungen.

Erfindungsgemäße Farbstoffmischungen bestehen aus zwei oder mehreren Farbstoffen der Formel I, in der $R^1$, $R^2$, $R^3$ und $R^4$ die oben angegebenen Bedeutungen haben. Bevorzugt sind Mischungen aus bevorzugten Farbstoffen der Formel I, und dabei insbesondere solcher, die sich nur in der Bedeutung des Restes $R^1$ unterscheiden.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden, so z.B.:

1) Durch Mischen von mindestens zwei separat hergestellten und formierten Einzelfarbstoffen der Formel I.

2) Durch Mischen der separat hergestellten, nicht formierten Einzelfarbstoffe und gemeinsame Formierung.

3) Durch Mischen der Ausgangsmaterialien der allgemeinen Formeln V; VI und VII; VIII; oder VI und IX und gemeinsame weitere Umsetzung wie oben beschrieben.

Wird z.B. bei dem oben beschriebenen Verfahren des Cyanaustausches anstelle eines Einzelfarbstoffs der Formel V eine Mischung von zwei oder mehreren Farbstoffen der Formel V, die sich bezüglich $R^1$ und/oder $R^2$ und/oder $R^3$ und/oder $R^4$ voneinander unterscheiden, eingesetzt, so erhält man die entsprechende Mischung der erfindungsgemäßen Farbstoffe der Formel I.

Selbstverständlich kann die hierbei eingesetzte Mischung der Farbstoffe der Formel V ihrerseits entweder durch Mischung separat hergestellter Farbstoffe der Formel V erhalten werden, oder sie kann durch Kupplung der Diazoniumverbindung eines Amins der Formel VI auf eine entsprechende Mischung von Kupplungskomponenten der Formel VII, die sich bezüglich $R^1$ und/oder $R^2$ und/oder $R^3$ und/oder $R^4$ voneinander unterscheiden, hergestellt werden.

Es ist auch möglich, bei dem oben beschriebenen Acylierungsverfahren anstelle eines einzelnen Ausgangsfarbstoffs der Formel VIII eine Mischung von zwei oder mehreren Farbstoffen der Formel VIII, die sich bezüglich $R^1$ und/oder $R^4$ voneinander unterscheiden, zu acylieren. Eine weitere Variante dieses Verfahrens ist die Acylierung eines Farbstoffs oder einer Mischung von zwei oder mehreren Farbstoffen der Formel VIII, die sich bezüglich $R^1$ und/oder $R^4$ unterscheiden, mit einer Mischung von zwei oder mehreren Acylierungsmitteln, die sich bezüglich $R^2$ und $R^3$ voneinander unterscheiden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1/_2$-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 80 bis 230 °C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr

farbstarke grünstichig blaue Färbungen und Drucke mit sehr guten Echtheitseigenschaften, insbesondere einer sehr guten Licht, Thermofixier-, Thermomigrier- und Waschechtheit, vor allem einer sehr guten M + S-Echtheit (C4A-Wäsche).

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse sowie zum alkalischen Ätzreservedruck.

Soll ein ausschließlich hydrophobe Fasern enthaltendes Textilmaterial oder nur der hydrophobe Faseranteil eines Mischtextils durch alkalischen Ätzreservedruck coloriert werden, so erfolgt die Durchführung in an sich bekanntr Weise durch Klotzen der Textilmaterialien mit Farbflotten oder Bedrucken mit Farbpasten, die einen oder mehrere Farbstoffe der Formel I neben den bekannten üblichen Färbereihilfsmitteln, wie beispielsweise Dispergiermitteln, Netzmitteln, Schaumdämpfungsmitteln oder Klotzhilfsmitteln bzw. Druckverdickern, enthalten. Geklotzte Gewebebahnen werden auf eine Flottenaufnahme von 50 bis 120% abgequetscht. Nach diesem ersten Klotz- oder Druckprozeß kann die Ware getrocknet oder angetrocknet werden, oder aber es kann ohne jede gesonderte Trocknungsoperation "naß in naß" weitergearbeitet werden. Die Gewebebahnen werden dann mit einer Ätzreservedruckpaste bedruckt, die als Ätzmittel eine Base, die in 5%iger wäßriger Lösung einen pH-Wert von mindestens 8 hervorbringt, sowie die in Druckpasten für den Textildruck üblichen bekannten Zusatzstoffe, insbesondere Verdickungsmittel, enthält.

Die vorstehend als erster Verfahrensschritt genannte Operation des Klotzens bzw. Bedruckens mit einer Farbflotte bzw. Farbpaste und das als zweiter Schritt genannte Bedrucken mit der Ätzresrvedruckpaste können auch vertauscht werden. In diesem Fall wird das Textilmaterial nach Aufdrucken der Ätzdruckpaste mit der Farbflotte für die Fondfärbung überklotzt bzw. mit der Farbpaste überdruckt. Auch bei dieser Reihenfolge kann "naß in naß gearbeitet werden, oder das Textilmaterial kann nach dem Bedrucken mit der Ätzreservepaste angetrocknet oder getrocknet werden. Anschließend werden die geklotzten und bedruckten Gewebebahnen einer Wärmebehandlung zwischen 100 und 230 ° C unterworfen. Im unteren Temperaturbereich von etwa 100 bis 110 ° C erfolgt die Wärmezufuhr vorzugsweise durch überhitzten Wasserdampf. Für die Wärmebehandlungen, die zwischen 160 und 230 ° C durchgeführt werden, wird als Wärmeträger vorzugsweise Heißluft verwendet. Nach der Hitzebehandlung, die eine Fixierung der Dispersionsfarbstoffe sowie die Zerstörung der Farbstoffe der Formel I an den mit der Ätzreservedruckpaste bedruckten Stellen zur Folge hat, weden die Textilien in der für Polyester üblichen Art und Weise nachbehandelt, heiß und kalt gespült und getrocknet. Eine besondere Ausführungsform des Ätzdruckverfahrens besteht darin, daß die Klotzflotte außer Farbstoffen der Formel I zusätzlich solche enthält, die alkalibeständig sind und somit durch die einzusetzenden alkalischen Ätzreservedruckpasten nicht zerstört werden. Verfährt man im übrigen wie oben angegeben, so erhält man mehrfarbige Dessins. Wie bereits oben bechrieben, besteht eine weitere Ausführungsform des Verfahrens darin, daß man die Farbflotte der Formel I nicht durch Klotzen mit einer Klotzflotte auf dem gesamten Gewebe appliziert, sondern ebenfalls in Form von Druckpasten auf das Gewebe aufdruckt.

Fixierung und Fertigstellung der Textildrucke erfolgen dann anschließend wie oben bereits beschrieben. Auch bei diesem Verfahren ist es möglich, den aufgedruckten Farbdruckpasten Farbstoffe zuzusetzen, die alkaliresistent sind. Auch in diesem Falle werden mehrfarbige Dessins erhalten.

Basen, die als Ätzmittel in der Ätzreservedruckpaste enthalten sind, und die in 5%iger wäßriger Lösung mindestens einen pH-Wert von 8 hervorbringen, sind in großer Zahl bekannt. Beispiele für solche Basen sind die Hydroxide der Alkali- und Erdalkalimetalle, Salze von Erdalkali-und Alkalimetallen mit schwachen organischen oder anorganischen Säuren, wie z.B. Alkaliacetat, Alkalicarbonate oder -bicarbonate, Trialkaliphosphate, Ammoniak oder auch aliphatische Amine, wie z.B. Triethyl-, Tripropyl- oder Tributylamin, Ethanolamin, Dimethyl- oder Diethylethanolamin, Diethanolamin, Methyl-, Ethyl- oder Propyldiethanolamin oder Triethanolamin üblicherweise werden als Basen Erdalkalihydroxide, wie z.B. Calciumhydroxid, Alkalihydroxide, wie beispielsweise Natrium- oder Kaliumhydroxid, oder Alkalisalze von schwachen anorganischen Säuren, wie beispielsweise Natriumcarbonat, Trinatriumphosphat oder Natrium- bzw. Kaliumsilicat, eingesetzt. Vorzugsweise wird als Base in den Ätzreservedruckpasten Natrium- oder Kaliumhydroxid oder insbesondere Natrium-oder Kaliumcarbonat oder Natrium- oder Kaliumbicarbonat verwendet. Auch Mischungen verschiedener Basen können verwendet werden. Die Konzentration der Base in den Ätzreservedruckpasten beträgt zweckmäßigerweise 25 bis 250 g/kg, vorzugsweise 50 bis 130 g/kg. Die Ätzreservedruckpasten enthalten neben den genannten Basen die üblichen in Textildruckpaten enthaltenen Zusätze, insbesondere Verdickungsmittel, wie z.B. Alginate, Stärkeprodukte, synthetische polymere Verdickungsmittel, Mineralöle, hydrotrope Substanzen, wie beispielsweise Harnstoff, sowie Zusätze, welche die Benetzung, Durchdringung und Farbstoffaufnahme fördern. Besonders günstig für den Ätzvorgang ist die Anwesenheit nichtionogener Detergenzien, die zweckmäßigerweise in den Ätzreservedruckpasten enthalten sind, wie z.B. Glycerin und/oder Polyglykole, wie Polyethylenglykol mit einem mittleren Molekulargewicht von 300 bis 400.

In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzübereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglycolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzübereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

In eine Suspension aus 100 ml Dimethylsulfoxid, 2,1 g Natriumcyanid und 7,1 g Kupfer-I-cyanid werden bei 70 bis 75 °C 68,1 g des Farbstoffs der Formel X

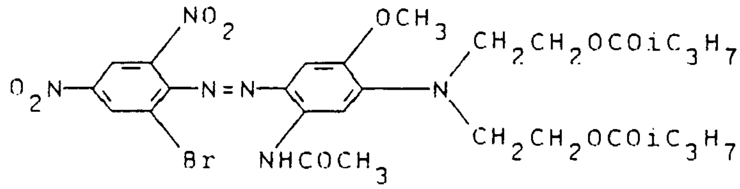

(X)

eingetragen und 30 min bei dieser Temperatur gerührt. Dann wird die Temperatur 30 min auf 110°C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 47,0 g eines grünstichig blauen Farbstoffs der Formel XI

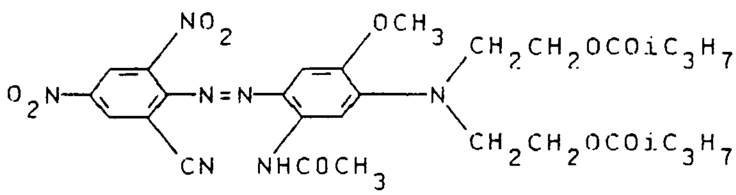

(XI)

der bei 636 nm sein Absorptionsmaximum hat.

Durch einen praxisüblichen Finish-Prozeß einer wäßrigen Mahlung in einer Perlmühle mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2000 g Wasser dispergiert. Die Dispersion wird mit 3,6 ml 85 %iger Phosphorsäure versetzt, mit Natronlauge auf einen pH-Wert von 4 eingestellt und mit 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130°C. Nach anschließendem Spülen, reduktivem Nachbehandeln mit einer 0,2%igen wäßrigen NatriumdithionitLösung während 15 min bei 70 bis 80°C, Spülen und Trocknen erhält man eine farbstarke grünstichig blaue Färbung mit sehr guten coloristischen Eigenschaften, insbesondere sehr guter Thermofixier-, Thermomigrier- und Waschechtheit.

Beispiel 2

Werden, wie in Beispiel 1 beschrieben, 66,7 g des Farbstoffs der Formel XII

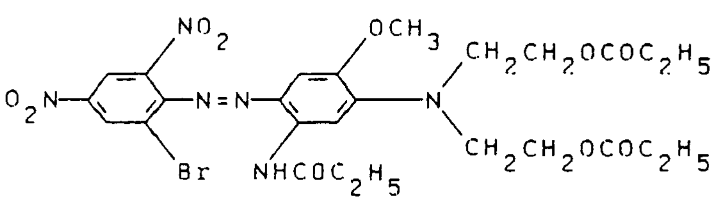

(XII)

einem Cyanidaustausch unterworfen, so erhält man 47,4 g des grünstichig blauen Farbtones der Formel XIII

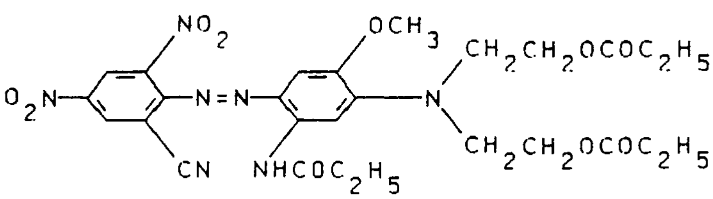

(XIII)

der bei 634 nm sein Absorptionsmaximum hat.

Analog den Beispielen 1 und 2 lassen sich die erfindungsgemäßen Farbstoffe der folgenden Tabelle herstellen. Sie färben hydrophobe Fasern ebenfalls in vollen grünstichig blauen Nuancen mit ausgezeichneten Echtheiten.

Tabelle

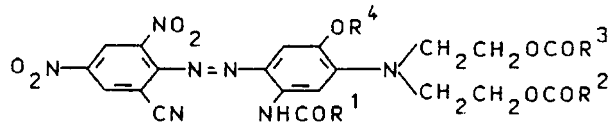

| $R^1$ | $R^2$ | $R^3$ | $R^4$ |
|---|---|---|---|
| $CH_3$ | $C_2H_5$ | $C_2H_5$ | $CH_3$ |
| $CH_3$ | $C_2H_5$ | $n-C_3H_7$ | $CH_3$ |
| $CH_3$ | $C_2H_5$ | $i-C_3H_7$ | $CH_3$ |
| $CH_3$ | $C_2H_5$ | sek.$C_4H_9$ | $CH_3$ |
| $CH_3$ | $C_2H_5$ | $n-C_4H_9$ | $CH_3$ |
| $CH_3$ | $C_2H_5$ | $C_5H_{11}-2$ | $CH_3$ |
| $CH_3$ | $n-C_3H_7$ | $n-C_3H_7$ | $CH_3$ |
| $CH_3$ | $n-C_3H_7$ | $i-C_3H_7$ | $CH_3$ |
| $CH_3$ | $n-C_3H_7$ | $n-C_4H_9$ | $CH_3$ |
| $CH_3$ | $n-C_3H_7$ | $i-C_4H_9$ | $CH_3$ |
| $CH_3$ | $i-C_3H_7$ | $n-C_4H_9$ | $CH_3$ |
| $CH_3$ | $i-C_3H_7$ | sek.$C_4H_9$ | $CH_3$ |
| $CH_3$ | $i-C_3H_7$ | $n-C_5H_{11}$ | $CH_3$ |
| $CH_3$ | $i-C_3H_7$ | $C_5H_{11}-3$ | $CH_3$ |
| $CH_3$ | $n-C_4H_9$ | $n-C_4H_9$ | $CH_3$ |
| $CH_3$ | $n-C_4H_9$ | $i-C_4H_9$ | $CH_3$ |
| $CH_3$ | $n-C_4H_9$ | sek.$C_4H_9$ | $CH_3$ |
| $CH_3$ | $n-C_4H_9$ | $n-C_5H_{11}$ | $CH_3$ |
| $CH_3$ | $i-C_4H_9$ | $i-C_4H_9$ | $CH_3$ |
| $CH_3$ | $i-C_4H_9$ | sek.$C_4H_9$ | $CH_3$ |
| $CH_3$ | $i-C_4H_9$ | $n-C_5H_{11}$ | $CH_3$ |
| $CH_3$ | sek.$C_4H_9$ | sek.$C_4H_9$ | $CH_3$ |
| $CH_3$ | sek.$C_4H_9$ | $C_5H_{11}-2$ | $CH_3$ |
| $CH_3$ | $n-C_5H_{11}$ | $n-C_5H_{11}$ | $CH_3$ |
| $CH_3$ | $n-C_5H_{11}$ | $C_5H_{11}-2$ | $CH_3$ |
| $CH_3$ | $C_5H_{11}-2$ | $C_5H_{11}-2$ | $CH_3$ |
| $CH_3$ | $C_5H_{11}-3$ | $C_5H_{11}-3$ | $CH_3$ |
| $CH_3$ | $C_5H_{11}-2$ | $C_5H_{11}-3$ | $CH_3$ |

| $R^1$ | $R^2$ | $R^3$ | $R^4$ |
|---|---|---|---|
| $C_2H_5$ | $C_2H_5$ | $n-C_3H_7$ | $CH_3$ |
| $C_2H_5$ | $C_2H_5$ | $i-C_3H_7$ | $CH_3$ |
| $C_2H_5$ | $C_2H_5$ | $n-C_4H_9$ | $CH_3$ |
| $C_2H_5$ | $C_2H_5$ | $i-C_4H_9$ | $CH_3$ |
| $C_2H_5$ | $C_2H_5$ | sek.$C_4H_9$ | $CH_3$ |
| $C_2H_5$ | $C_2H_5$ | $n-C_5H_{11}$ | $CH_3$ |
| $C_2H_5$ | $n-C_3H_7$ | $n-C_3H_7$ | CH3 |
| $C_2H_5$ | $n-C_3H_7$ | $i-C_3H_7$ | $CH_3$ |
| $C_2H_5$ | $n-C_3H_7$ | $n-C_4H_9$ | $CH_3$ |
| $C_2H_5$ | $n-C_3H_7$ | $i-C_4H_9$ | $CH_3$ |
| $C_2H_5$ | $n-C_3H_7$ | $n-C_5H_{11}$ | $CH_3$ |
| $C_2H_5$ | $n-C_3H_7$ | $C_5H_{11}-3$ | $CH_3$ |
| $n-C_3H_7$ | $C_2H_5$ | $C_2H_5$ | $CH_3$ |
| $n-C_3H_7$ | $C_2H_5$ | $i-C_3H_7$ | $CH_3$ |
| $n-C_3H_7$ | $C_2H_5$ | $n-C_3H_7$ | $CH_3$ |
| $n-C_3H_7$ | $C_2H_5$ | $n-C_4H_9$ | $CH_3$ |
| $n-C_3H_7$ | $C_2H_5$ | $n-C_5H_{11}$ | $CH_3$ |
| $n-C_3H_7$ | $n-C_3H_7$ | $n-C_3H_7$ | $CH_3$ |
| $n-C_3H_7$ | $i-C_3H_7$ | $i-C_3H_7$ | $CH_3$ |
| $n-C_3H_7$ | $n-C_3H_7$ | $i-C_3H_7$ | $CH_3$ |
| $n-C_3H_7$ | $n-C_3H_7$ | $n-C_4H_9$ | $CH_3$ |
| $n-C_3H_7$ | $n-C_3H_7$ | $C_5H_{11}-2$ | $CH_3$ |
| $n-C_3H_7$ | $n-C_4H_9$ | $n-C_4H_9$ | $CH_3$ |
| $n-C_3H_7$ | $i-C_4H_9$ | $i-C_4H_9$ | $CH_3$ |
| $n-C_3H_7$ | sek.$C_4H_9$ | sek.$C_4H_9$ | $CH_3$ |
| $n-C_3H_7$ | $n-C_5H_{11}$ | $n-C_5H_{11}$ | $CH_3$ |
| $i-C_3H_7$ | $C_2H_5$ | $C_2H_5$ | $CH_3$ |
| $i-C_3H_7$ | $C_2H_5$ | $i-C_3H_7$ | $CH_3$ |
| $i-C_3H_7$ | $C_2H_5$ | $n-C_4H_9$ | $CH_3$ |
| $i-C_3H_7$ | $C_2H_5$ | $i-C_4H_9$ | $CH_3$ |
| $i-C_3H_7$ | $C_2H_5$ | $C_5H_{11}-3$ | $CH_3$ |
| $i-C_3H_7$ | $n-C_3H_7$ | $n-C_3H_7$ | $CH_3$ |
| $i-C_3H_7$ | $n-C_3H_7$ | $i-C_3H_7$ | $CH_3$ |
| $i-C_3H_7$ | $n-C_3H_7$ | $n-C_4H_9$ | $CH_3$ |
| $i-C_3H_7$ | $n-C_3H_7$ | $C_5H_{11}-2$ | $CH_3$ |

| $R^1$ | $R^2$ | $R^3$ | $R^4$ |
|---|---|---|---|
| $i-C_3H_7$ | $n-C_4H_9$ | $n-C_4H_9$ | $CH_3$ |
| $i-C_3H_7$ | $n-C_4H_9$ | $n-C_5H_{11}$ | $CH_3$ |
| $i-C_3H_7$ | $i-C_4H_9$ | $i-C_4H_9$ | $CH_3$ |
| $i-C_3H_7$ | $i-C_4H_9$ | $n-C_4H_9$ | $CH_3$ |
| $i-C_3H_7$ | $i-C_4H_9$ | $n-C_5H_{11}$ | $CH_3$ |
| $i-C_3H_7$ | $n-C_5H_{11}$ | $n-C_5H_{11}$ | $CH_3$ |
| $i-C_3H_7$ | $C_5H_{11}-2$ | $C_5H_{11}-2$ | $CH_3$ |
| $i-C_3H_7$ | $C_5H_{11}-3$ | $C_5H_{11}-3$ | $CH_3$ |
| $CH_3$ | $C_2H_5$ | $C_2H_5$ | $C_2H_5$ |
| $CH_3$ | $i-C_3H_7$ | $C_2H_5$ | $C_2H_5$ |
| $CH_3$ | $C_2H_5$ | $n-C_4H_9$ | $C_2H_5$ |
| $CH_3$ | $n-C_3H_7$ | $n-C_3H_7$ | $C_2H_5$ |
| $CH_3$ | $n-C_3H_7$ | $n-C_4H_9$ | $C_2H_5$ |
| $CH_3$ | $n-C_3H_7$ | sek.$C_4H_9$ | $C_2H_5$ |
| $CH_3$ | $n-C_3H_7$ | $C_5H_{11}-2$ | $C_2H_5$ |
| $CH_3$ | $i-C_3H_7$ | $i-C_3H_7$ | $C_2H_5$ |
| $CH_3$ | $i-C_3H_7$ | $n-C_3H_7$ | $C_2H_5$ |
| $CH_3$ | $i-C_3H_7$ | $n-C_4H_9$ | $C_2H_5$ |
| $CH_3$ | $i-C_3H_7$ | $i-C_4H_9$ | $C_2H_5$ |
| $CH_3$ | $i-C_3H_7$ | sek.$C_4H_9$ | $C_2H_5$ |
| $CH_3$ | $i-C_3H_7$ | $n-C_5H_{11}$ | $C_2H_5$ |
| $C_2H_5$ | $C_2H_5$ | $C_2H_5$ | $C_2H_5$ |
| $C_2H_5$ | $C_2H_5$ | $i-C_3H_7$ | $C_2H_5$ |
| $C_2H_5$ | $C_2H_5$ | $n-C_4H_9$ | $C_2H_5$ |
| $C_2H_5$ | $C_2H_5$ | $i-C_4H_9$ | $C_2H_5$ |
| $C_2H_5$ | $C_2H_5$ | $n-C_5H_{11}$ | $C_2H_5$ |
| $C_2H_5$ | $n-C_3H_7$ | $n-C_3H_7$ | $C_2H_5$ |
| $C_2H_5$ | $n-C_3H_7$ | $i-C_3H_7$ | $C_2H_5$ |
| $C_2H_5$ | $n-C_3H_7$ | $i-C_4H_9$ | $C_2H_5$ |
| $C_2H_5$ | $n-C_3H_7$ | sek.$C_4H_9$ | $C_2H_5$ |
| $C_2H_5$ | $i-C_3H_7$ | $i-C_3H_7$ | $C_2H_5$ |
| $C_2H_5$ | $i-C_3H_7$ | $n-C_4H_9$ | $C_2H_5$ |
| $C_2H_5$ | $i-C_3H_7$ | sek.$C_4H_9$ | $C_2H_5$ |

| $R^1$ | $R^2$ | $R^3$ | $R^4$ |
|---|---|---|---|
| $n-C_3H_7$ | $C_2H_5$ | $C_2H_5$ | $C_2H_5$ |
| $n-C_3H_7$ | $C_2H_5$ | $n-C_3H_7$ | $C_2H_5$ |
| $n-C_3H_7$ | $C_2H_5$ | $i-C_4H_9$ | $C_2H_5$ |
| $n-C_3H_7$ | $n-C_3H_7$ | $n-C_3H_7$ | $C_2H_5$ |
| $n-C_3H_7$ | $n-C_3H_7$ | $i-C_3H_7$ | $C_2H_5$ |
| $n-C_3H_7$ | $n-C_3H_7$ | $n-C_5H_{11}$ | $C_2H_5$ |
| $i-C_3H_7$ | $C_2H_5$ | $C_2H_5$ | $C_2H_5$ |
| $i-C_3H_7$ | $C_2H_5$ | $i-C_3H_7$ | $C_2H_5$ |
| $i-C_3H_7$ | $C_2H_5$ | $n-C_4H_9$ | $C_2H_5$ |
| $i-C_3H_7$ | $i-C_3H_7$ | $i-C_3H_7$ | $C_2H_5$ |
| $i-C_3H_7$ | $i-C_3H_7$ | $n-C_3H_7$ | $C_2H_5$ |

## Patentansprüche

**1.** Monoazofarbstoffe der allgemeinen Formel I

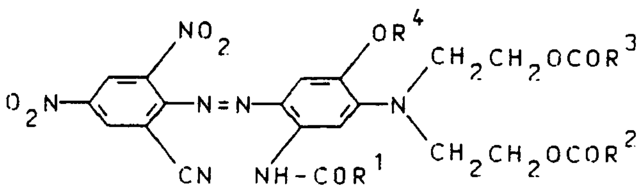

(I)

in der

| | |
|---|---|
| $R^1$ | Alkyl mit 1 bis 3 C-Atomen, |
| $R^2$ und $R^3$ | unabhängig voneinander Alkyl mit 2 bis 5 C-Atomen |
| $R^4$ | Methyl oder Ethyl |

bedeuten.

**2.** Monoazofarbstoffe nach Anspruch 1, dadurch gekennzeichnet, daß $R^1$ Methyl oder Ethyl bedeutet.

**3.** Monoazofarbstoffe nach Anspruch 1 und/oder 2, dadurch gekennzeichnet, daß $R^2$ und/oder $R^3$ unabhängig voneinander Alkyl mit 2 bis 4 C-Atomen bedeuten.

**4.** Monoazofarbstoffe nach einem oder mehreren der Ansprüche 1 bis 3, dadurch gekennzeichnet, daß $R^2$ und/oder $R^3$ n-Propyl, i-Propyl, n-Butyl, i-Butyl und sek.Butyl bedeuten.

**5.** Monoazofarbstoffe nach einem oder mehreren der Ansprüche 1 bis 3, dadurch gekennzeichnet, daß $R^1$ Ethyl und $R^2$ und/oder $R^3$ Ethyl bedeuten.

**6.** Monoazofarbstoffe nach einem oder mehreren der Ansprüche 1 bis 5, dadurch gekennzeichnet, daß $R^4$ Methyl bedeutet.

7. Monoazofarbstoffe nach einem oder mehreren der Ansprüche 1 bis 6, dadurch gekennzeichnet, daß $R^2$ und $R^3$ gleich sind.

8. Monoazofarbstoffe nach einem oder mehreren der Ansprüche 1 bis 7, dadurch gekennzeichnet, daß die Summe der C-Atome in den Resten $R^1$, $R^2$ und $R^3$ 5 bis 11, vorzugsweise 6 bis 10 beträgt.

9. Mischungen von zwei oder mehreren Azofarbstoffen nach einem oder mehreren der Ansprüche 1 bis 8.

10. Verfahren zur Herstellung von Azofarbstoffen der Formel I des Anspruchs 1, dadurch gekennzeichnet, daß man einen Azofarbstoff der Formel V

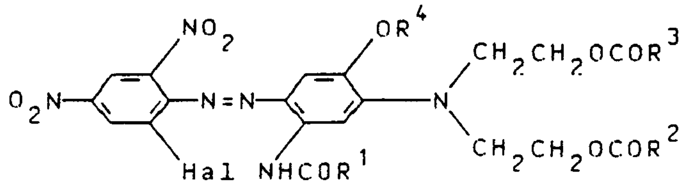

(V)

in welcher $R^1$, $R^2$, $R^3$ und $R^4$ die in Anspruch 1 angegebene Bedeutung besitzen und Hal ein Halogenatom bedeutet, in an sich bekannter Weise einer nukleophilen Austauschreaktion mit $CN^{\ominus}$ als nukleophilem Agenz unterwirft, oder daß man einen Farbstoff der Formel VIII

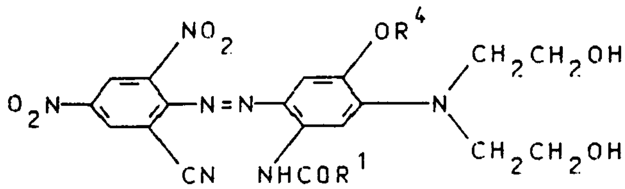

(VIII)

worin $R^1$ und $R^4$ die im Anspruch 1 angegebenen Bedeutungen besitzen, mit Acylierungsmtteln der Formeln

$X\text{-}COR^2$ bzw. $X\text{-}COR^3$

worin X ein unter Mitnahme des Bindungselektronenpaares abspaltbarer Rest ist und $R^2$ bzw. $R^3$ die im Anspruch 1 angegebene Bedeutung haben, acyliert.

11. Verfahren nach Anspruch 10, dadurch gekennzeichnet, daß man zur Herstellung von Mischungen von zwei oder mehreren Farbstoffen der Formel I zwei oder mehr Farbstoffe der Formel V oder VIII als Ausgangsmaterial einsetzt.

12. Verwendung der Azofarbstoffe der Formel I des Anspruchs 1 oder deren Mischungen gemäß Anspruch 9 zum Färben und Bedrucken von hydrophoben Fasern.

## Claims

1. Monoazo dyestuffs of the general formula I

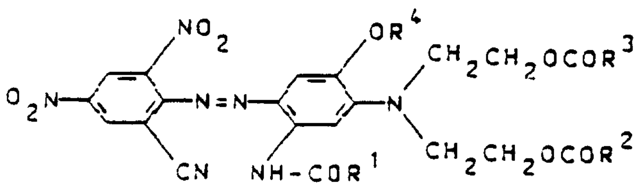

(I)

in which $R^1$ denotes alkyl having 1 to 3 C atoms, $R^2$ and $R^3$ independently of one another denote alkyl having 2 to 5 C atoms and $R^4$ denotes methyl or ethyl.

**2.** Monoazo dyestuffs according to Claim 1, characterized in that $R^1$ denotes methyl or ethyl.

**3.** Monoazo dyestuffs according to Claim 1 and/or 2, characterized in that $R^2$ and/or $R^3$ independently of one another denote alkyl having 2 to 4 C atoms.

**4.** Monoazo dyestuffs according to one or more of Claims 1 to 3, characterized in that $R^2$ and/or $R^3$ denote n-propyl, i-propyl, n-butyl, i-butyl and sec.-butyl.

**5.** Monoazo dyestuffs according to one or more of Claims 1 to 3, characterized in that $R^1$ denotes ethyl and $R^2$ and/or $R^3$ denote ethyl.

**6.** Monoazo dyestuffs according to one or more of Claims 1 to 5, characterized in that $R^4$ denotes methyl.

**7.** Monoazo dyestuffs according to one or more of Claims 1 to 6, characterized in that $R^2$ and $R^3$ are identical.

**8.** Monoazo dyestuffs according to one or more of Claims 1 to 7, characterized in that the sum of the C atoms in the radicals $R^1$, $R^2$ and $R^3$ is 5 to 11, preferably 6 to 10.

**9.** Mixtures of two or more azo dyestuffs according to one or more of Claims 1 to 8.

**10.** Process for the preparation of azo dyestuffs of the formula I of Claim 1, characterized in that an azo dyestuff of the formula V

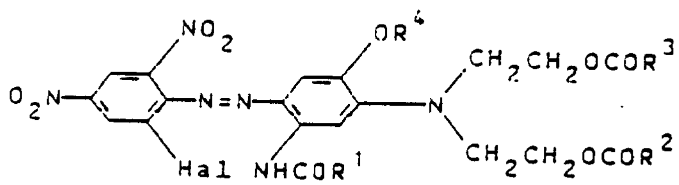

(V)

in which $R^1$, $R^2$, $R^3$ and $R^4$ have the meaning given in Claim 1 and Hal denotes a halogen atom, is subjected to a nucleophilic replacement reaction with $CN^{\ominus}$ as the nucleophilic agent in a manner which is known per se, or that a dyestuff of the formula VIII

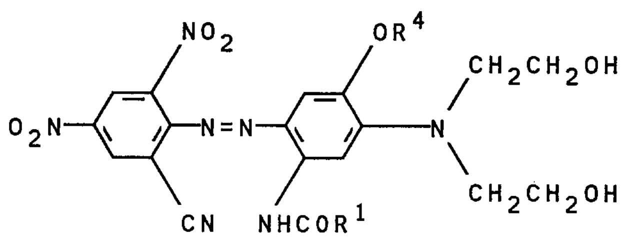

(VIII)

wherein $R^1$ and $R^4$ have the meanings given in Claim 1, is acylated with acylating agents of the formulae

$X\text{-}COR^2$ or $X\text{-}COR^3$

wherein X is a radical which can be split off, taking the bonding electron pair and $R^2$ and $R^3$ have the meaning given in Claim 1.

**11.** Process according to Claim 10, characterized in that two or more dyestuffs of the formula V or VIII are employed as the starting material for preparation of mixtures of two or more dyestuffs of the formula I.

**12.** Use of the azo dyestuffs of the formula I of Claim 1 or mixtures therof according to Claim 9 for dyeing and printing hydrophobic fibres.

**Revendications**

**1.** Colorants monoazoïques de formule générale I :

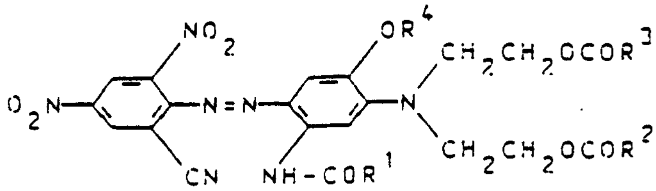

(I)

dans laquelle

| | |
|---|---|
| $R^1$ | est un radical alkyle ayant de 1 à 3 atomes de carbone, |
| $R^2$ et $R^3$, | indépendamment l'un de l'autre, sont chacun un radical alkyle ayant de 2 à 5 atomes de carbone, |
| $R^4$ | est le radical méthyle ou éthyle. |

**2.** Colorants monoazoïques selon la revendication 1, caractérisés en ce que $R^1$ est le radical méthyle ou éthyle.

**3.** Colorants monoazoïques selon les revendications 1 et/ou 2, caractérisés en ce que $R^2$ et/ou $R^3$, indépendamment l'un de l'autre, sont chacun un radical alkyle ayant de 2 à 4 atomes de carbone.

**4.** Colorants monoazoïques selon l'une ou plusieurs des revendications 1 à 3, caractérisés en ce que $R^2$ et/ou $R^3$ sont chacun un radical n-propyle, isopropyle, n-butyle, isobutyle ou sec-butyle.

**5.** Colorants monoazoïques selon l'une ou plusieurs des revendications 1 à 3, caractérisés en ce que $R^1$ est le radical éthyle et $R^2$ et/ou $R^3$ sont chacun le radical éthyle.

**6.** Colorants monoazoïques selon l'une ou plusieurs des revendications 1 à 5, caractérisés en ce que $R^4$ est le radical méthyle.

**7.** Colorants monoazoïques selon l'une ou plusieurs des revendications 1 à 6, caractérisés en ce que $R^2$ et $R^3$ sont identiques.

**8.** Colorants monoazoïques selon l'une ou plusieurs des revendications 1 à 7, caractérisés en ce que le nombre total des atomes de carbone des radicaux $R^1$, $R^2$ et $R^3$ est compris entre 5 et 11 et de préférence entre 6 et 10.

**9.** Mélanges d'au moins deux colorants azoïques selon l'une ou plusieurs des revendications 1 à 8.

**10.** Procédé pour préparer des colorants azoïques de formule I selon la revendication 1, caractérisé en ce qu'on soumet un colorant azoïque de formule V :

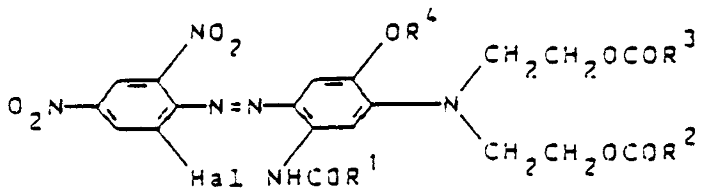

(V)

dans laquelle $R^1$, $R^2$, $R^3$ et $R^4$ ont les significations données dans la revendication 1 et Hal est un atome d'halogène, d'une manière connue en soi à une réaction d'échange nucléophile avec $CN^-$ servant d'agent nucléophile, ou encore en ce qu'on acyle un colorant de formule VIII :

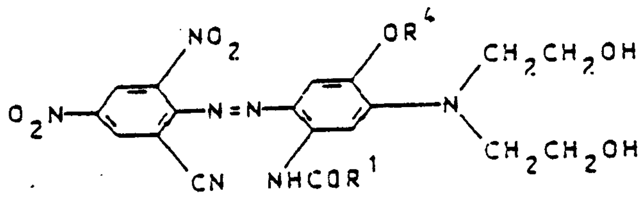

(VIII)

dans laquelle $R^1$ et $R^4$ ont les significations données dans la revendication 1, avec des agents d'acylation ayant les formules X-$COR^2$ ou X-$COR^3$, où X est un radical éliminable avec entraînement de la paire d'électrons de liaison, et respectivement $R^2$ et $R^3$ ont les significations données dans la revendication 1.

**11.** Procédé selon la revendication 10, caractérisé en ce qu'on utilise pour préparer des mélanges d'au moins deux colorants de formule I au moins deux colorants de formule V ou VIII.

**12.** Utilisation des colorants azoïques de formule I selon la revendication 1 ou de leurs mélanges selon la revendication 9, pour teindre ou imprimer des fibres hydrophobes.